Europäisches Patentamt

European Patent Office

Office européen des brevets

(11) Veröffentlichungsnummer: **0 486 819 A1**

# EUROPÄISCHE PATENTANMELDUNG

(21) Anmeldenummer: **91117868.9**

(22) Anmeldetag: **19.10.91**

(51) Int. Cl.5: **B60T 8/40**

(30) Priorität: **22.11.90 DE 4037142**

(43) Veröffentlichungstag der Anmeldung:
**27.05.92 Patentblatt 92/22**

(84) Benannte Vertragsstaaten:
**CH DE FR GB IT LI**

(71) Anmelder: **ROBERT BOSCH GMBH**
**Postfach 30 02 20**
**W-7000 Stuttgart 30(DE)**

(72) Erfinder: **Epple, Volker, Dipl.-Ing. (FH)**
**Maieräckerstrasse 20**
**W-7000 Stuttgart 31(DE)**
Erfinder: **Klose, Michael, Dipl.-Ing.**
**Rosenstrasse 12**
**W-7122 Besigheim 3(DE)**
Erfinder: **Müller, Klaus**
**Mergenthiemer Weg 19**
**W-7146 Tamm(DE)**
Erfinder: **Maisch, Wolfgang, Dr.-Ing.**
**Elbinger Weg 4**
**W-7141 Schwieberdingen(DE)**

(54) **Elektromotorisch betriebene Hydropumpe.**

(57) Es wird eine elektromotorisch betriebene, ventil-gesteuerte Hydropumpe für die Bereitstellung des Vordrucks in Bremsdruckregelsystemen beschrieben.

Bei Einschalten des Motors wird dieser für eine Zeit voll bestromt und danach wird der Strom auf einen relativ geringen Wert begrenzt.

Fig.1

## Stand der Technik

Bei Antriebsschlupfregelsystemen wird der Vordruck zur Regelung des Drucks an der Bremse mittels eines Hydroaggregats erzeugt, das eine motorbetriebene, ventilgesteuerte Pumpe enthält. Man kann hierzu z. B. die Rückförderpumpe eines Antiblockierregelsystems ausnutzen (DE-A1 3816073). Es sind auch Antiblockierregelsysteme bekannt, bei denen der für die Druckerhöhung bei ABS-Regelung benötigte Vordruck mittels eines Hydroaggregats erzeugt wird und mittels eines Druckeinspeiseventils für die ABS-Regelung zur Verfügung gestellt wird (DE-A1 3339336). Der Druck wird bisher mittels hydraulischer Begrenzungsventile begrenzt, wobei sich ein dem Motorlastmoment proportionaler elektrischer Strom bzw. eine proportionale Drehzahl einstellt.

## Vorteile der Erfindung

Der Erfindung liegt die Aufgabe zugrunde, mit einer ventilgesteuerten Hubkolbenpumpe unter Zuhilfenahme einer elektronischen Schaltung eine dem Verbrauchsvolumenstrom proportionale, sowie dem Druck umgekehrt proportionale Motordrehzahl einzustellen (Prinzip: elektrisches Druckbegrenzungsventil). Diese Aufgabe wird erfindungsgemäß dadurch gelöst, daß das Motormoment über den Motorstrom durch eine Regelschaltung begrenzt wird und daß bei Einschaltung des Motors kurzzeitig eine Vollbestromung zugelassen wird.

Der Einsatz des Stromreglers ermöglicht eine am Volumenbedarf des Verbrauchers orientierte Förderleistung der Pumpe. Dies hat zur Folge, daß der Pumpenmotor nur in Druckaufbauphasen mit niedriger Drehzahl und somit geringerer Geräuschentwicklung arbeitet.

Es kommt also eine Geräuschreduzierung während der Druckaufbauphasen zustande, während des Druckhaltens bzw. Druckabbaus arbeitet die Pumpe geräuschlos. Es gibt keine hydraulische Verlustleistung (Wärme). Bei Wiederanlauf kompensiert die Druckeinspannung des Druckmittels die Hochlaufphase des Elektromotors. Es wird ein "elektrisches" Druckbegrenzungsventil erzeugt, d.h. das Sicherheits-DBV wird im (fehlerfreien) Betrieb nicht überströmt; damit gibt es kein "Verschäumungs"-Problem am DBV.

## Zeichnungsbeschreibung

Anhand der Zeichnung werden Ausführungsbeispiele der Erfindung erläutert.
Es zeigen:

Fig. 1          ein erstes Ausführungsbeispiel der Erfindung

Fig. 2 bis 5     Diagramme zur Erläuterung

Fig. 6          ein weiteres Ausführungsbeispiel der Erfindung

Fig. 7 und 8     Diagramme zur Erläuterung

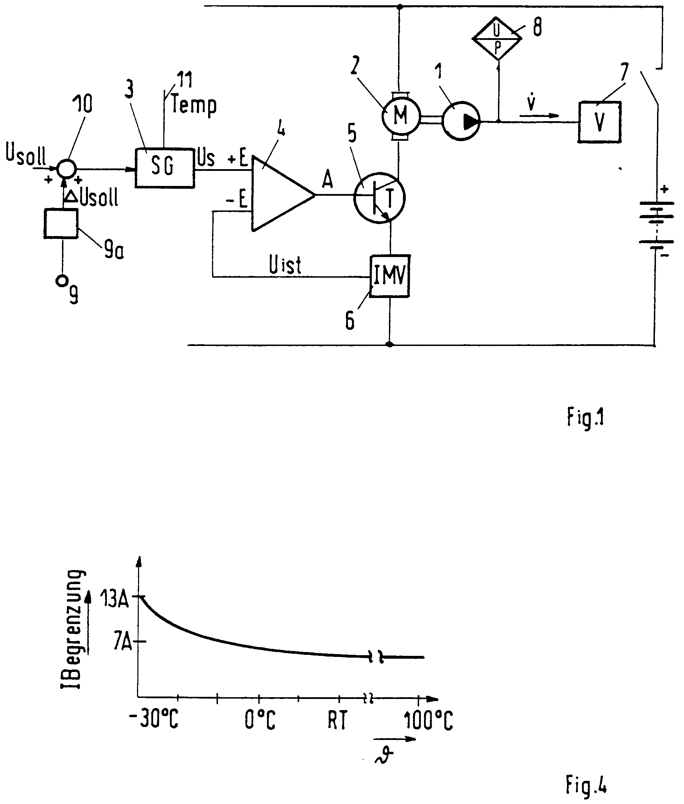

Fig. 1 zeigt eine erfindungsgemäße Schaltung für eine ventilgesteuerte Hydropumpe 1, die von einem Elektromotor 2 angetrieben wird. Die Schaltung besteht im wesentlichen aus einem Sollwertgeber 3, der die Sollwertanpassung für den nicht invertierenden Eingang + E eines Stromreglers 4 bewirkt. Der Stromregler 4 steuert einen Leistungsverstärker 5 in der Weise, daß ein Potentialanstieg am Eingang + E ebenfalls einen Potentialanstieg am Reglerausgang A zur Folge hat und der Motorstrom zunimmt. Die elektrische Stromstärke wird mit einer Strommeßvorrichtung 6 in eine proportionale Istwertspannung gewandelt und dem invertierenden Eingang - E des Stromreglers zugeführt. Der Arbeitspunkt der Schaltung ergibt sich durch Potentialgleichheit der beiden Signale $U_S$ und $U_{ist}$.

Die in Fig. 1 dargestellte hydr. Anordnung soll prinzipiell das Zusammenspiel E-Motor 2, Pumpe 1 und Volumenverbraucher 7 darstellen. Ein Drucksensor 8 ist nicht Bestandteil der Erfindung, er soll lediglich symbolisieren, daß neben der Volumenaufnahme V des Verbrauchers 7 auch der Druck p entsprechend der Druck Volumenkennlinie der hydr. Anordnung von Pumpe 1 bis Verbraucher 7 ansteigt, wenn die Pumpe 1 über einen Schalter 10 eingeschaltet wird und läuft.

Der bis jetzt beschriebene Teil der Fig. 1 übernimmt die Aufgabe einer Druckbegrenzung. Der Motor 2 wird die Pumpe 1 mit dem begrenzten Strom ständig mit einem Drehmoment versorgen, das dem gewünschten Begrenzungsdruck entspricht. Lechagen des Volumenverbrauchers 7 gleicht die Pumpen/Motorkombination 2/1 durch kurzes Drehen aus, bis durch die damit geförderte Menge die Leckmenge ersetzt und der gewünschte Begrenzungsdruck wieder aufgebaut ist.

Die Pumpe dreht sich also nur, wenn Volumenstrombedarf besteht. Ihre Geräuscherzeugung wird mithin auf ein Minimum begrenzt. Die geschilderte Methode kann also überall dort eingesetzt werden, wo eine Pumpe ständig in Betrieb sein muß; bei fehlendem Volumenstrombedarf wird die von der Pumpe gelieferte Menge i.d. Regel über ein Druckbegrenzungsventil abgeblasen.

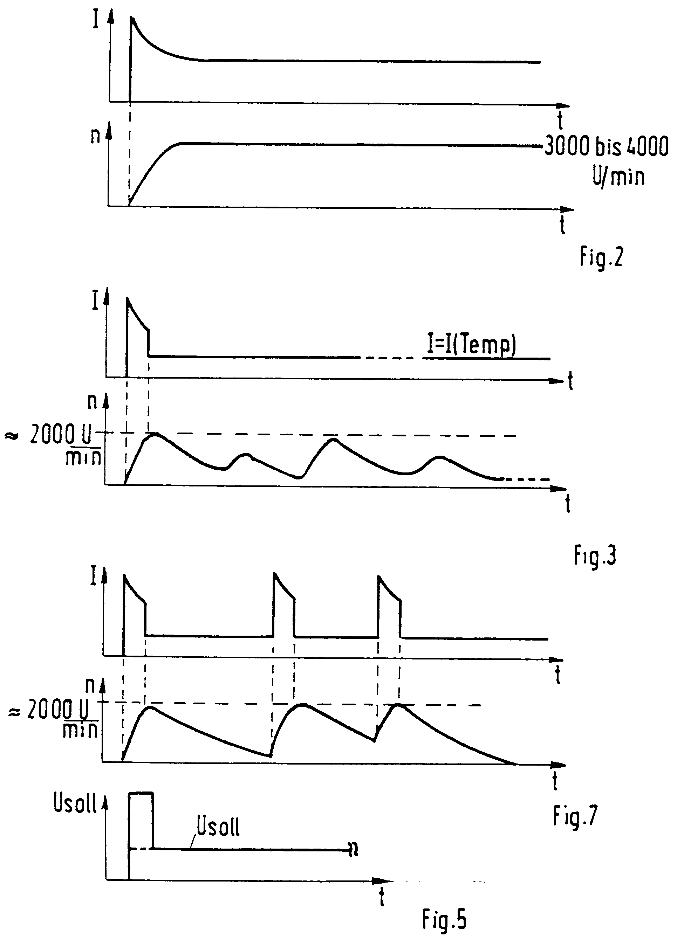

Hierzu gehören dann auch die Diagramme der Fig. 2 und 3, welche einerseits den Stromverlauf über der Zeit und andererseits den Drehzahlverlauf über der Zeit zeigen, wie er durch das Druckauf- und Druckabbauen oder -halten entsprechend dem ASR-Regelverlauf entsteht.

Fig. 2 gibt den Stand der Technik wieder. Dort läuft die Drehzahl des Pumpenmotors auf eine Lastdrehzahl hoch, die dem Strom entspricht, den der Motor ziehen kann.

In Fig. 3 wird der Motor nur beim Einschalten kurz voll bestromt i.d. Regel ≤ 100 ms, danach wird die Strombegrenzung eingeschaltet. Sowie von der Pumpe eine Förderung bei steigendem Druck verlangt wird, sinkt die Pumpenmotordrehzahl ab. Im Extremfall bleibt die Pumpe stehen (z.B. bei 150 bar), was der eingangs beschriebenen Druckbegrenzungsfunktion entspricht.

Wenn die Hydraulikanlage wieder eine Flüssigkeitsmenge benötigt - im ASR-Fall wird nach einem Druckabbau erneut Druckaufbau verlangt - so entspannt sich zunächst das zwischen Pumpe und Verbraucherventil (bei ASR ist das das Regelventil) eingesperrte Volumen in den Verbraucher (Radzangen). Der Druck hinter der Pumpe sinkt und der Pumpenmotor läuft aus dem Druckhalte-Stillstand an in Volumenstromförderungsbetrieb. Mit ihm ergibt sich der in Fig. 3 dargestellte Drehzahlverlauf mit dem Merkmal einer kleineren Maximaldrehzahl ggn. der Drehzahl in Fig. 2; im Fall der Strombegrenzung (Fig. 3) bleibt die max. Drehzahl unter 2000 U/min.

Der Anfangsimpuls der Fig. 3 kommt in der Schaltung der Fig. 1 dadurch zustande, daß beim Einschalten der Pumpe ein Signal auf eine Klemme 9 gelangt, wodurch dann ein Block 9a einen Impuls mit der Amplitude ΔU und der Impulsbreite ΔT erzeugt; dieser Impuls wird im Addierer 10 der Begrenzungsspannung Usoll überlagert und die Summe dient während der Zeit ΔT als Sollgröße (sh. Fig. 5).

Durch den Pfeil 11 in Fig. 1 wird angedeutet, daß die Temperaturabhängigkeit des Motorstrom berücksichtigt werden soll. Die Strombegrenzung wird hier über eine Kennlinie $U_S(\nu)$ variabel eingestellt. Für einen ABS/ASR-Motor, wie er z.B. in der DE 38 16073 beschrieben ist, sieht die Kennlinie etwa so aus wie in Fig. 4 gezeigt.

Wenn die Anordnung über einen weiten Temperaturbereich, insbesondere im Tieftemperaturbereich, arbeiten muß, ohne daß eine Temperaturstörgrößenaufschaltung vorgesehen ist, müßte die Strombegrenzung auf einen relativ hohen Wert eingestellt werden, damit die Funktion der Pumpe in der Kälte gewährleistet ist. Um ein Hochlaufen im Normaltemperaturbereich infolge des relativ hohen Pumpenbegrenzungsstromes zu verhindern, muß das maximal zulässige Druckniveau hoch eingestellt werden. Die Pumpe erzeugt mithin unnötig hohe Drücke.

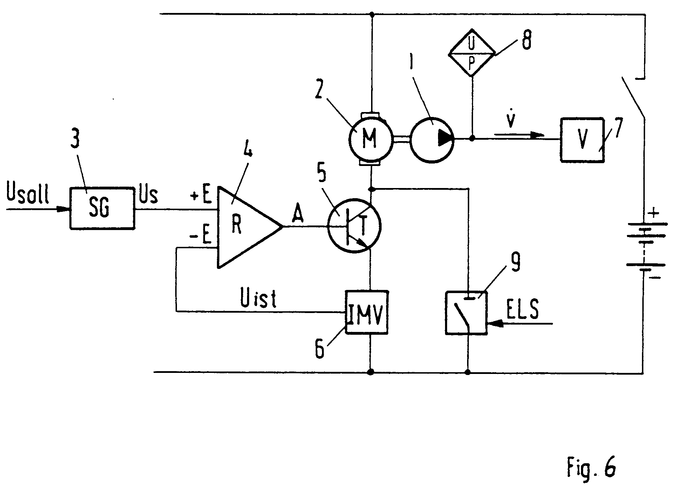

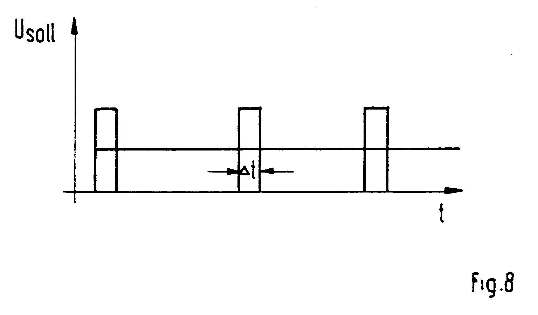

Dem kann abgeholfen werden durch kurze Vollbestromung des Motors immer dann, wenn ein neuer Druckaufbau verlangt wird, was aus dem Signalverlauf (Algorithmus) der Ansteuerung (Steuergerät) der Hydraulikanlage bekannt ist. Damit kann entweder der Sollwert Usoll in Fig. 1 kurzzeitig hochgesetzt (ähnlich wie in Fig. 5) oder - zur Entlastung des Zweigs 3, 4, 5 - ein zus. Schalter 9 (Relais, Leistungstransistor) eingeschaltet werden, wie dies Fig. 6 zeigt. Die zugehörigen Diagramme zeigen Fig. 7 und 8. Durch die geschilderte Kurz-Vollstromansteuerung wird der Pumpenmotor unter allen Bedingungen anlaufen können.

Eine weitere Verbesserung wird dadurch erreicht, daß auch die Dauer der Kurz-Vollbestromung in Abhängigkeit von der Temperatur geschieht. In Fig. 4 ist sinngemäß anstelle des Stroms die Ansteuerdauer ΔT einzusetzen; sie bewegt sich bei ASR von 100 ms i.d. Kälte auf minimal 20 ms bei Raumtemperatur.

## Patentansprüche

1. Elektromotorisch betriebene ventilgesteuerte Hydropumpe für die Bereitstellung eines Vordrucks in Bremsdruckregelsystemen z. B. für die Bremsdruckregelung in Antriebsschlupf- oder Antiblockierregelsystemen, dadurch gekennzeichnet, daß bei Einschalten des Motors dieser für eine kurze Zeit voll bestromt wird und daß danach der Strom auf einen gegenüber diesem Vollstromwert geringeren Wert begrenzt wird.

2. Hydropumpe nach Anspruch 1, dadurch gekennzeichnet, daß zusätzlich zu den Zeitpunkten, an denen im Bremsdruckregelsystem auf Druckaufbau geschaltet wird, eine kurzzeitige volle Bestromung des Motors erfolgt.

3. Hydropumpe nach Anspruch 1 oder 2, dadurch gekennzeichnet, daß die Strombegrenzung von der Umgebungstemperatur abhängig gemacht wird.

Fig.1

Fig.4

EP 0 486 819 A1

Fig.2

Fig.3

Fig.7

Fig.5

Fig. 6

Fig.8

Europäisches
Patentamt

**EUROPÄISCHER RECHERCHENBERICHT**

Nummer der Anmeldung

EP    91 11 7868

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PATENT ABSTRACTS OF JAPAN vol. 10, no. 354 (P-521)28. November 1986 & JP-A-61 150 858 ( NIPPON DENSO CO LTD ) 9. Juli 1986 * Zusammenfassung * --- | 1 | B60T8/40 |
| A | EP-A-0 313 292 (LUCAS INDUSTRIES PLC) 26. April 1989 ----- | | |

**RECHERCHIERTE SACHGEBIETE (Int. Cl.5 )**

B60T

Der vorliegende Recherchenbericht wurde für alle Patentansprüche erstellt

| Recherchenort | Abschlußdatum der Recherche | Prüfer |
|---|---|---|
| DEN HAAG | 23 MAERZ 1992 | PEMBERTON P. |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : In der Anmeldung angeführtes Dokument
L : aus andern Gründen angeführtes Dokument
...................................................................................
& : Mitglied der gleichen Patentfamilie, übereinstimmendes
     Dokument

EPO FORM 1503 03.82 (P0403)